# EUROPÄISCHE PATENTSCHRIFT

(11) **EP 2 596 540 B1**
(45) Veröffentlichungstag und Bekanntmachung des Hinweises auf die Patenterteilung: **08.10.2014**
(21) Anmeldenummer: 11738681.3
(22) Anmeldetag: 18.07.2011
(51) Int. Cl.: H01M 4/66, H01M 10/04, H01M 10/052, H01M 10/0525, H01M 10/0585, H01M 4/13, H01M 2/20

(54) **BATTERIE MIT QUADERFÖRMIGEN ZELLEN WELCHE EINE BIPOLARE ELEKTRODE ENTHALTEN**
BATTERY COMPRISING CUBOID CELLS WHICH CONTAIN A BIPOLAR ELECTRODE
BATTERIE À ÉLÉMENTS PARALLÉLÉPIPÉDIQUES CONTENANT UNE ÉLECTRODE BIPOLAIRE

(30) Priorität: 20.07.2010 DE 102010031543
(43) Veröffentlichungstag der Anmeldung: 29.05.2013
(73) Patentinhaber: Evonik Litarion GmbH, 01917 Kamenz (DE)
(72) Erfinder: PILGRAM, Peter, 85055 Ingolstadt (DE); HAHN, Henrik, 01099 Dresden (DE); BARENSCHEE, Ernst Robert, 61130 Nidderau (DE)
(74) Vertreter: Tostmann, Holger Carl
(86) Internationale Anmeldenummer: PCT/EP2011/062208
(87) Internationale Veröffentlichungsnummer: WO 2012/010539

(56) Entgegenhaltungen:
- EP-A1- 1 986 250
- WO-A1-2007/082863
- DE-A1-102008 010 824
- JP-A- 2007 299 680

## Beschreibung

Die Erfindung betrifft eine Batterie, mit einer Mehrzahl von in sich geschlossenen, im Wesentlichen quaderförmigen Zellgehäusen, bei denen jeweils eine Seitenfläche zumindest teilweise als negativer Pol und die gegenüberliegende Seitenfläche zumindest teilweise als positiver Pol ausgebildet ist, wobei die Zellgehäuse Pol an Pol aneinander anliegend, sich zwischen einem positven und einem negativen Kontakt erstrecken, und wobei die Zellgehäuse jeweils von einem elektrisch nicht leitenden, mechanisch tragenden Rahmen umgrenzt sind.

Eine derartige Batterie ist aus der WO 2009/103527 A1 bekannt.

Eine galvanische Zelle im Sinne dieser Erfindung ist eine Vorrichtung zur Umwandlung chemischer in elektrische Energie. Es handelt sich um einen mit ionenleitendem Elektrolyten gefüllten Raum, in welchen eine Anode und eine Kathode angeordnet sind. Der Elektrolyt ist im Raum gehalten, sodass Ionen den Raum nicht verlassen können. Die Anode und die Kathode können mehrteilig ausgeführt sein. Um Kurzschlüsse zwischen Anode und Kathode zu verhindern, kann ein ionisch leitender, elektrisch isolierender Separator zwischen den Elektroden angeordnet sein.

Aktivmaterial im hier gebrauchten Sinne ist eine Stoff, welcher in der Lage ist, Ionen ein- und auszulagern. Anoden-Aktivmaterial bildet die Anode, Kathoden-Aktivmaterial die Kathode. Konter-Aktivmaterial von Anoden-Aktivmaterial ist Kathoden-Aktivmaterial; Konter-Aktivmaterial von Kathoden-Aktivmaterial ist Anoden-Aktivmaterial.

Zumindest zwei elektrisch miteinander verschaltete galvanische Zellen bilden eine Batterie.

Der hier verwendete Begriff Zellgehäuse bezeichnet eine mechanische Baugruppe, die zumindest eine galvanische Zelle beherbergt.

WO 2009/103527 A1 beschreibt die Gestaltung einer für Fahrzeuganwendungen geeigneten Lithium-Ionen-Hochvolt-Sekundärbatterie. Dabei beherbergt jedes Zellgehäuse genau eine galvanische Zelle; um die Kapazität einer einzelnen Zelle zu steigern, sind eine Vielzahl von Elektodenfolien derselben Polarität darin über Stromableiterfahnen elektisch miteinader verbunden. Die Spannung zwischen den Polen der Zellgehäuse ergibt sich somit unmittelbar aus der Wahl der Aktivmaterialien; bei der beispielsweise genannten Li-Ionen Ausführung sind 3.6 V Zellspannung pro Zellgehäuse zu erwarten. Innerhalb der dargestellten Batterie sind 30 Zellgehäuse in Serie geschaltet, sodass die Batteriespannung rund 108 V beträgt.

EP 1 986 250 A offenbart ein Batteriemodul, bestehend aus einer Vielzahl von gestapelten bipolaren Batterien, an deren oberen und unteren Fläche Stromabnehmer angebracht sind, und zwischen denen eine elektronenleitende elastische Vorrichtung angebracht ist, die das Batteriemodul vor Vibrationen schützt.

WO 2007/082863 offenbart eine Batterieanordnung wobei bipolare Batterien zwischen Endplatten gegeneinander verspannt sind.

JP 2007/299680 A offenbart eine dipolare Sekundärbatterie bestehend aus einer Schichtstruktur, wobei die äußerste Schicht aus einer letifähigen Schicht besteht, die ein Elastizitätsmodul von 0.1 bis 120 GPa aufweist.

Die derartige Batterie ist gut für Einsatzzwecke geeignet, wo hohe Kapazitäten gefragt sind (High-Engery-Anwendung). Prinzpbedinger Nachteil der zellinternen Verschaltung über die Stromableiterfahren ist der verleichsweise große Innenwiderstand, welcher die Ladungs- und Entladungsgeschwindigkeit herabsetzt. Darüber hinaus erhöht er den Fertigungsaufwand.

In Hinblick auf diesen Stand der Technik liegt der vorliegenden Erfindung die Aufgabe zu Grunde, eine Batterie der eingangs genannten Gattung anzugeben, welche einen geringeren Innenwiderstand aufweist und deswegen für Anwendungen geeignet ist, die rasche Ladung oder Entladung erfordern (High-Power-Anwendung).

Gelöst wird die Aufgabe durch mindestens ein aus Kupfer und Aluminium gebildetes, ebenes, kupferseitig mit Anoden-Aktivmaterial, aluminiumseitig mit Kathoden-Aktivmaterial beschichtetes Bimetall, welches innerhalb eines der Zellgehäuses so anzuordnen ist, dass es sich parallel zu den Polen des Zellgehäuses erstreckt, ionisch dichtend am Rahmen des Zellgehäuses angebunden ist und auf diese Weise das Zellgehäuse in zumindest zwei seriell geschaltete galvanische Zellen teilt.

Gegenstand der Erfindung ist mithin eine Batterie, die in Anspruch 1 definiert ist, mit einer Mehrzahl von in sich geschlossenen, im Wesentlichen quaderförmigen Zellgehäusen, bei denen jeweils eine Seitenfläche zumindest teilweise als negativer Pol und die gegenüberliegende Seitenfläche zumindest teilweise als positiver Pol ausgebildet ist, wobei die Zellgehäuse Pol an Pol aneinander anliegend, sich zwischen einem positven und einem negativen Kontakt erstrecken, und wobei die Zellgehäuse jeweils von einem elektrisch nicht leitenden, mechanisch tragenden Rahmen umgrenzt sind, bei welcher sich mindestens ein aus Kupfer und Aluminium gebildetes, ebenes, kupferseitig mit Anoden-Aktivmaterial, aluminiumseitig mit Kathoden-Aktivmaterial beschichtetes Bimetall innerhalb eines der Zellgehäuse parallel zu dessen Polen erstreckt, ionisch dichtend am Rahmen des Zellgehäuses angebunden ist und dergestalt das Zellgehäuse in zumindest zwei seriell geschaltete galvanische Zellen geteilt ist.

Eine Grundidee der vorliegenden Erfindung besteht darin, innerhalb der Baugruppe Zellgehäuse nicht lediglich eine galvanische Zelle vorzusehen, sondern mindestens zwei in Serie geschaltete galvanische Zellen. Die elektrische Verschaltung erfolgt erfindungsgemäß über das Bimetall, das zugleich als Stromsammler für eine Anode und für eine Kathode dient. Da das Bimetall erfindungsgemäß ionisch dichtend an dem Rahmen angebunden wird - das bedeutet, Elektrolyt beiderseits des Bimetalls steht nicht untereinander in Kontakt - ist kein Ionenaustausch über das Bimetall hinaus gestattet. Lediglich Elektronen wandern durch das Bimetall hindurch und schaffen somit den für die Serienschaltung erforderlichen elektrischen Schluss.

Der Vorteil dieser Anordnung besteht darin, dass der Strom zwischen den in Serie geschalteten Elektroden über die gesamte Fläche des Bimetalls fließen kann, wodurch der Innenwiderstand sinkt. Dadurch wird die Ladung- und Entladungsgeschwindigkeit gesteigert, es ist auch weniger Abwärme aus der Batterie abzuführen. Auch entfallen Stromableiterfahnen innerhalb des Zellgehäuses, was die Fertigung des Zellgehäuses vereinfacht und vergünstigt.

Die Kapazität eines einzelnen, erfindungsgemäßen Zellgehäuses ist bei gleichem Volumen freilich geringer als bei dem im Stand der Technik beschriebenen Zellgehäuses; bei einer High-Power-Anwendung kommt es aber darauf nicht an. Hier ist eher vorteilhaft, dass die Spannung zwischen den Polen eines einzelnen Zellgehäuses bei identischen Aktivmaterialien mindestens doppelt so groß ist wie beim Stand der Technik.

Insgesamt gesehen, überträgt die Erfindung die konstruktiven Vorteile der bekannten High-Energy-Batterie auf eine High-Power-Batterie.

Vorteilhafterweise wird der negative Pol des Zellgehäuses von einem flächigen, innenseitig mit Anoden-Aktivmaterial beschichteten Kupferkörper gebildet; der positive Pol des Zellgehäuses sollte entsprechend von einem flächigen, innenseitig mit Kathoden-Aktivmaterial beschichteten Aluminiumkörper gebildet sein. Auf diese Weise gerät das Zellgehäuse besonders kompakt und sein Innenwiderstand wird weiter reduziert.

Sofern die Pole auf ihrer Innenseite mit Aktivmaterial beschichtet sind, bietet es sich an, dass innerhalb des Zellgehäuses auf dem Bimetall aufgeschichtetes Aktivmaterial mit auf einem Pol aufgeschichtetem Konter-Aktivmaterial eine galvanische Zelle bildet. Auf diese Weise fällt das Zellgehäuse besonders kompakt aus.

Es ist auch möglich, zwei oder mehr Bimetalle innerhalb des Rahmens zu platzieren und auf diese Weise das Zellgehäuse in drei oder mehr galvanische Zellen zu teilen. Hierzu wird ein zweites aus Kupfer und Aluminium gebildetes, ebenes, kupferseitig mit Anoden-Aktivmaterial, aluminiumseitig mit Kathoden-Aktivmaterial beschichtetes Bimetall, welches sich innerhalb des Zellgehäuses parallel zum ersten Bimetall erstreckt, ionisch dichtend am Rahmen des Zellgehäuses angebunden und dergestalt das Zellgehäuse in zumindest drei seriell geschaltete galvanische Zellen geteilt, wobei auf dem ersten Bimetall aufgeschichtetes Aktivmaterial mit auf dem zweiten Bimetall aufgeschichtetem Konter-Aktivmaterial eine galvanische Zelle bildet.

Eine besondere Weiterbildung der Erfindung sieht vor, dass die Zellgehäuse mittels mindestens eines die Rahmen der Zellgehäuse umgreifenden Spannmittels zu einem Stapel verspannt werden. Die Spannkräfte werden dann unmittelbar zwischen dem Spannmittel und den Rahmen der Zellgehäuse übertragen. Auf diese Weise entsteht eine mechanisch sehr stabile Batterie mit guter Kontaktierung zwischen den Polen der Zellgehäuse.

Vorzugsweise wird die Zellchemie der Batterie auf Lithium-Ionen-Basis ausgeführt. Hierzu können die üblichen Aktivmaterialien verwendet werden. Dies sind für das Anoden-Aktivmaterial Graphite; amorphe Kohlenstoffe; Lithium-Speichermetalle und Li-Legierungen, einschließlich nanokristallines oder amorphes Silizium sowie Silizium-Kohlenstoff-Komposite, Zinn, Aluminium, und Antimon; und Li₄Ti₅O₁₂ oder deren Mischungen.

Eine besonders elegante Ausführungsform der Erfindung, welche in Anspruch 10 definiert ist, kann durch die Vewendung eines Liithium-Titanat-haltigen Anodenmaterials (so gennanntes LTO) erreicht werden: Bei der Verwendung von Li-Titanat (Li₄Ti₅O₁₂) als Anodennaterial kann nämlich auf das Bimetall verzichtet und stattdessen ein "Monometall" aus Aluminium, also eine reine Alufolie, verwendet werden. Das Titanat kann aufgrund seines hohen Potentials als Anodenmaterial auch auf Alufolie beschichtet werden. Das Aluminium-Monometall eignet sich dann als Trägermaterial sowohl für Anode und Kathode und kann damit auch als Trennschicht eingsetzt werden. Dank LTO-Anode vereinfacht das Aluminium-Monometall die Zelle noch einmal, ein Materialübergang entfällt, der Innenwiderstand wird potentiell noch einmal geringer und die Zelle wird preisgünstiger. Im Übrigen wird die Batterie genauso aufgebaut wie mit dem Bimetall.

Gegenstand der Erfindung ist mithin auch eine Batterie, mit einer Mehrzahl von in sich geschlossenen, im Wesentlichen quaderförmigen Zellgehäusen, bei denen jeweils eine Seitenfläche zumindest teilweise als negativer Pol und die gegenüberliegende Seitenfläche zumindest teilweise als positiver Pol ausgebildet ist, wobei die Zellgehäuse Pol an Pol aneinander anliegend, sich zwischen einem positven Kontakt und einem negativen Kontakt erstrecken, wobei die Zellgehäuse jeweils von einem elektrisch nicht leitenden, mechanisch tragenden Rahmen umgrenzt sind, und bei welcher mindestens ein aus Aluminium gebildetes, ebenes, einerseits mit einem Lithium-Titanat-haltigen Anoden-Aktivmaterial, andererseits mit einem Kathoden-Aktivmaterial beschichtetes Monometall, sich innerhalb eines der Zellgehäuse parallel zu dessen Polen erstreckt, ionisch dichtend am Rahmen des Zellgehäuses angebunden ist, und dergestalt das Zellgehäuse in zumindest zwei seriell geschaltete galvanische Zellen geteilt ist.

Die Wahl des Kathodenmaterials für die Monometall- und die Bimetall-Zelle ist frei, bei der Monometall-Zelle ist lediglich das Anodemmaterial auf Li-Titanat festgelegt. Für das Kathoden-Aktivmaterial kann entsprechend in beiden Ausführungsformen verwendet werden:
Lithiummetalloxide vom Typ LiMₓO₂, einschließlich LiCoO₂; LiNiO₂; LiNi₁₋ₓCoₓO₂; LiNi_{0,85}Co_{0,1}Al_{0,05}O₂; Li₁₊ₓ(Ni_{y}Co_{1-2y}Mn_{y})₁₋ₓO₂, 0≤x≤0,17, 0≤y≤0,5; dotierte oder undotierte LiMn₂O₄ Spinelle; und dotierte oder undotierte Lithiummetallphosphate LiMPO₄, einschließlich LiFePO₄, LiMnPO₄, LiCoPO₄, LiVPO₄; sowie Konversionsmaterialien wie Eisen(III)fluorid (FeF₃) oder deren Mischungen.

Die genannten Aktivmaterialen werden in ansich bekannter Weise mit etwaigen Leitfähigkeitszusätzen und einem Haftvermittler versetzt auf die Polkörper bzw. auf das Bimetall aufgetragen.

Bevorzugt wird das Bimetall in ansich bekannter Weise aus einer Aluminiumfolie und einer Kupferfolie hergestellt, indem die beiden Folien kaltverschweißt werden. Hierzu werden die Folien zunächst an der späteren Grenzfläche mit einer hohen Oberflächengüte versehen (poliert) und dann ohne besondere Hitzeeinwirkung, jedoch unter hohem Druck aufeinander gepresst. Durch die dichte Annäherung der Folien und der geringen Rauheit werden adhäsive Oberflächenkräfte an der Grenzfläche wirksam, welche die Folien zusammen halten. Das Herstellen von Cu/Al-Bimetall-Folie ist für sich Stand der Technik.

Gegenstand der Erfindung ist auch ein Zellgehäuse einer erfindungsgemäßen Batterie.

Die Erfindung soll nun anhand eines Ausführungsbeispiels unter Zuhilfenahme der Zeichnugen näher erläutert werden. Hierfür zeigen schematisch:

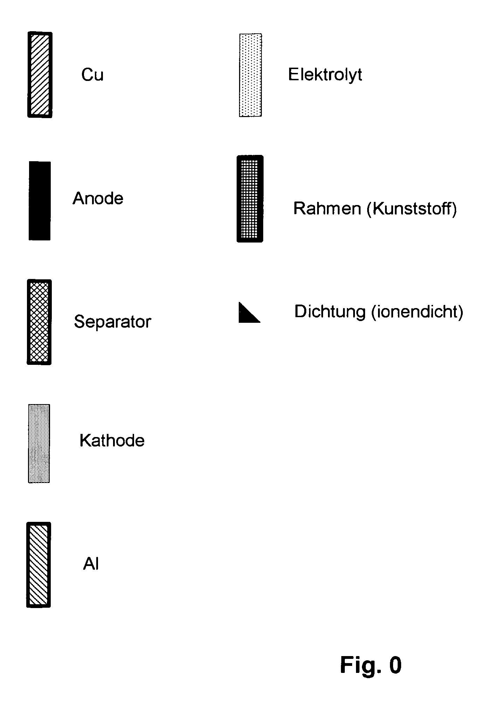

- Fig. 0:: Legende;
- Fig. 1:: Zellgehäuse im Querschnitt, zwei galvanische Zellen enthaltend;
- Fig. 2:: Zellgehäuse im Querschnitt, drei galvanische Zellen enthaltend;
- Fig. 3:: Zellgehäuse in Daufsicht;
- Fig. 4:: Batterie, Seitenanicht;
- Fig. 5:: Batterie, Draufsicht.

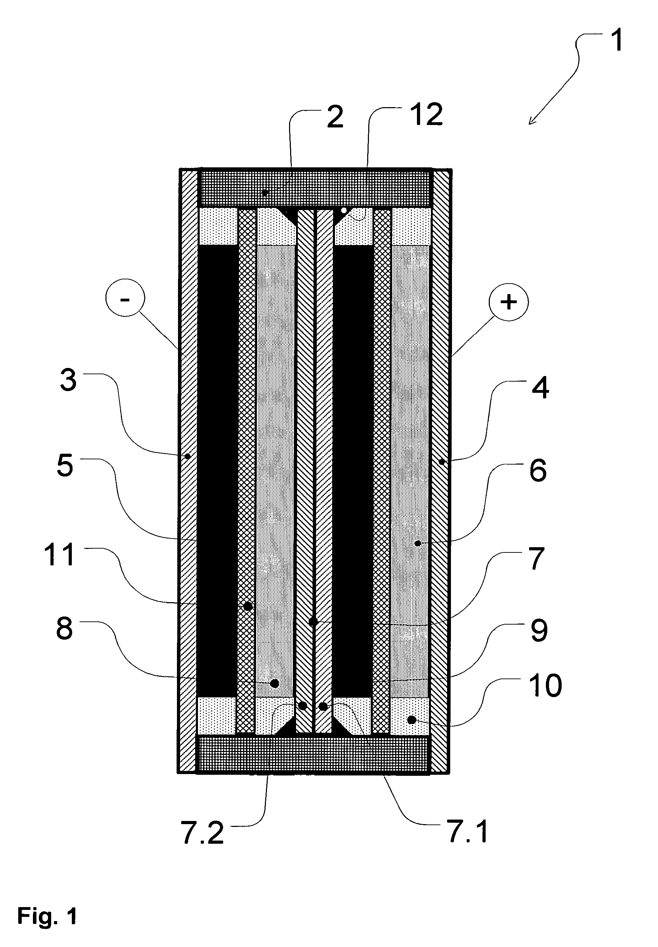

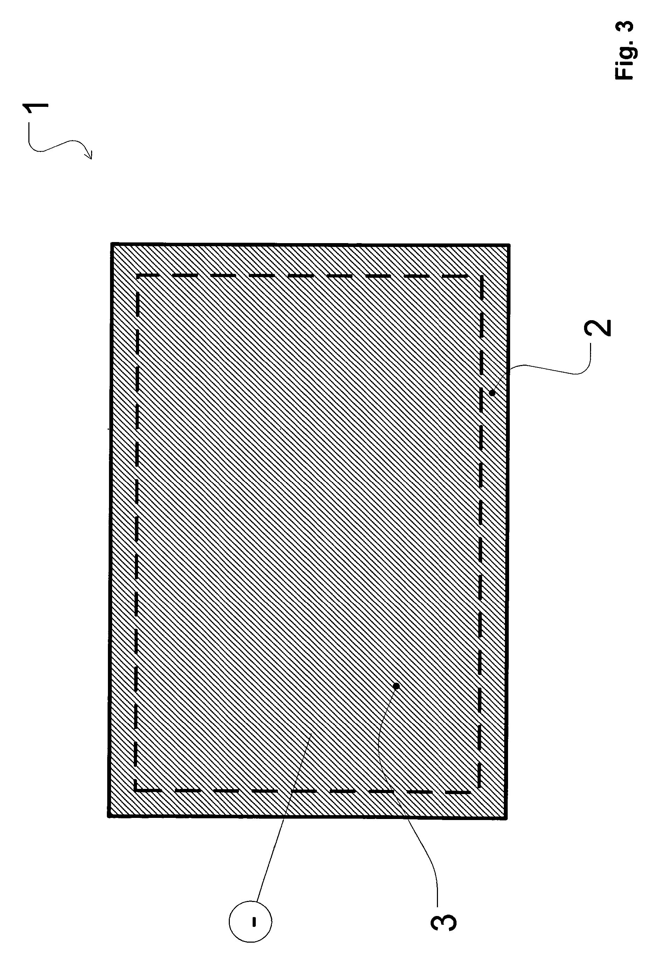

Figur 1 zeigt ein Zellgehäuse 1 einer erfindungsgemäßen Batterie 0 in seiner einfachsten Form. Das Zellgehäuse 1 ist um Wesentlichen quaderförmig und flach; wie insbesondere aus der Zusammenschau des Querschnitts in Figur 1 und der Draufsicht in Figur 3 hervorgeht. In den Querschnitten ist das Zellgehäuse 1 übertrieben dick dargestellt; in der Praxis kann das Zellgehäues 1 flacher ausgeführt sein.

Tragenes Teil des Zellgehäuses 1 ist ein Rahmen 2 aus nicht leitendem Kunststoff. Stirnseitig ist der Rahmen 2 einerseits von einem Kupferkörper 3 und andererseits von einem Aluminiumkörper 4 verschlossen. Bei den beiden Metallkörpern 3, 4 handelt es sich um ebene Folien, welche gegenüberliegende Seitenflächen des quaderförmigen Zellgehäuses 1 bilden. Der Kupferkörper 3 dient als negativer Pol (-) des Zellgehäuses; der Aluminiumkörper 4 als poitiver Pol (+).

Der Kupferkörper 3 ist auf seiner Innenseite mit Anoden-Aktivmaterial 5 beschichtet; der Aluminiumkörper 4 demgegenüber mit Kathoden-Aktivmaterial 6 beschichtet. Die Metallkörper 3, 4 dienen somit auch als Stromsammler der beiden Elektroden. Ein Kurzschluss zwischen den Metallkörpern 3, 4 wird über den Rahmen 1 verhindert, welcher insoweit auch als Isolator dient.

Bei den beiden Aktivmaterialien 5, 6 handelt es sich um an sich bekannte Mischungen für Lithium-Ionen-Sekundärzellen; nämlich Graphite; amorphe Kohlenstoffe; Lithium-Speichermetalle und -legierungen, einschließlich nanokristallines oder amorphes Silizium sowie Silizium-Kohlenstoff-Komposite, Zinn, Aluminium, und Antimon; und Li₄Ti₅O₁₂ oder deren Mischungen für die Anode bzw. Lithiummetalloxide vom Typ LiMₓO₂, einschließlich LiCoO₂; LiNiO₂; LiNi₁₋ₓCoₓO₂; LiNi_{0,85}Co_{0,1}Al_{0,0}O₂; Li₁₊ₓ(Ni_{y}Co₁-2_{y}Mn_{y})₁₋ₓO₂, 0≤x≤0,17, 0≤y≤0,5; dotierte oder undotierte LiMn₂O₄ Spinelle; und dotierte oder undotierte Lithiummetallphosphate LiMP0₄, einschließlich LiFePO₄, LiMnPO₄, LiCoPO₄, LiVPO₄; sowie Konversionsmaterialien wie Eisen(III)fluorid (FeF₃) oder deren Mischungen für die Kathode.

Die Aktivmaterialien 5, 6 auf den beiden Metallkörpern 3, 4 bilden zusammen keine galvanische Zelle, sondern mit jeweiligen Konter-Aktivmaterialen 6, 5 auf einem etwa mittig in das Zellgehäuse 1 eingezogenen Bimetall 7.

Das Bimetall 7 ist aus einer Kupferfolie 7.1 und einer Aluminiumfolie 7.2 zusammengesetzt. Hierzu wurden die beiden Folien 7.1, 7.2 an ihren zugewandten Seiten mit einer hohen Oberflächengüte (sehr geringe Rauheit durch Polieren oder dergleichen) versehen unter hohem Druck anneinander gepresst, sodass eine Kaltverschweißung auftritt und die Folien 7.1, 7.2 praktisch unlösbar zu einem Bimetall 7 fügt.

Das ebene Bimetall 7 erstreckt sich parallel zu den beiden Polen (+), (-) etwa mittig durch das Zellgehäuse 1 und teil dieses in zwei galvanische Zellen. Das Bimetall fungiert für beide galvanische Zellen jeweils als eine Elektrode, nämlich für die dem negativen Pol (-) zugewandten Zelle als Kathode und für die dem positiven Pol (+) zugewandten Zelle als Anode. Hierzu ist die dem negativen Pol (-) zugewandte Aluminium-Folie 7.2 des Bimetalls 7 mit Kathoden-Aktivmaterial 8 beschichtet; die dem positiven Pol (+) zugewandte Kupfer-Folie 7.1 des Bimetalls 7 ist entsprechend mit Anoden-Aktivmaterial 9 beschichtet.

Beiderseits des Bimetalls 7 ist das Zellgehäuse 1 mit Elektrolyt 10 gefüllt. Als Elektrolyt kann in ansich bekannter Weise z. B. eine Lösung von LiPF₆, LiBF₄, LiClO₄, LiAsF₆, LiCF₃SO₃, LiClO₄, Lithiumbisoxalatoborat (Libob) und/oder Lithium-Bis(trifluorormethylsulfonyl)amid (BTA, LiN(SO₂CF₃)₂) in Ethylencarbonat (EC), Dimethylcarbonat (DC), Propylencarbonat (PC), Methylpropylcarbonat (PMC), Butylencarbonat (BC), Diethylcarbonat (DEC), γ-Butyrolacton (γ-BL), SOCl₂ und/oder SO₂ eingesetzt werden. Die Elektrolytlösungen weisen üblicherweise von 0,1 bis 5 mol/l und besonders bevorzugt von 0,5 bis 2 mol/l an Leitsalz auf.

Elektrolyt 10 füllt jeweils den Raum zwischen dem Bimetall 7 und den Metallkörpern 3,4, in welchen jeweils eine Anode und eine Kathode vom Metallkörper bzw. dem Bimetall angeordnet ist, sodass beiderseits des Bimetalls 7 jeweils eine galvanische Zelle gebildet wird. Die Elektroden sind jeweils von einem ionendurchlässigen, aber elektrisch isolierenden Separator 11 von einander getrennt, um einen Kurzschluss zwischen den Elektroden zu vermeiden. Das Bimetall 7 ist an dem Rahmen 2 angebracht und im Kontaktbereich mit einer Dichtung 12 ionisch abgedichtet, sodass keine Ionenbrücke über das Bimetall entsteht. Die beiden galvanischen Zellen aus Anode 5 / Kathode 8 und Anode 9 und Kathode 6 sind damit ionisch voneinander getrennt, es besteht aber über das Bimetall ein elektrischer Schluss, sodass zwischen den beiden Polen (+), (-) des Zellgehäuses 1 zwei galvanische Zellen in Reihe geschaltet sind.

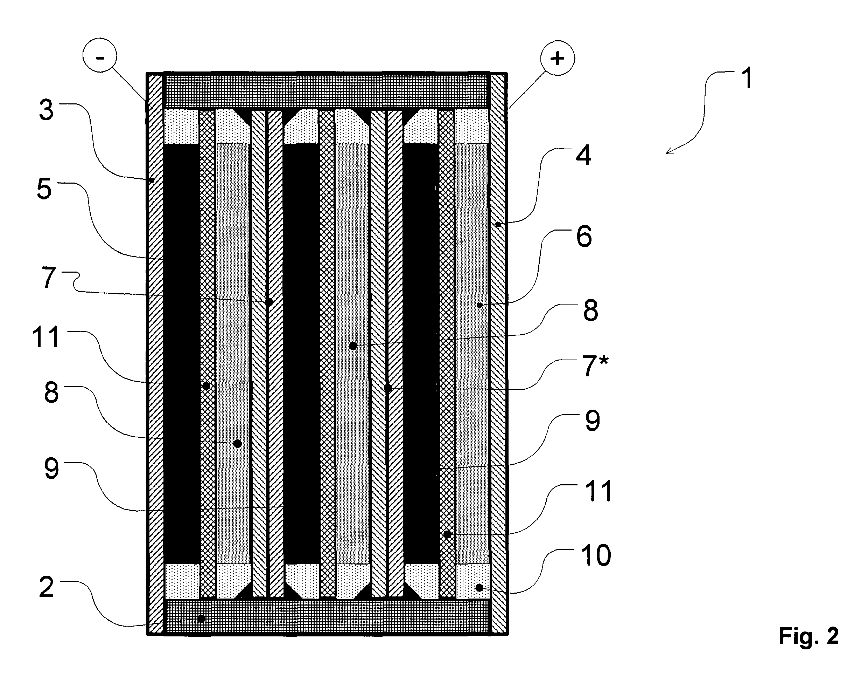

Erfindungsgemäß ist es auch möglich, das Zellgehäuse mit Hilfe von zwei Bimetallen in drei galvanische Zellen aufzuteilen. Die entsprechende Schichtung mit einem zweiten Bimetall 7* ist in Figur 2 dargestellt. Selbstverständich kann auch durch die Verwendung von mehr als zwei Bimetallen die Zellzahl pro Zellgehäuse weiter gesteigert werden.

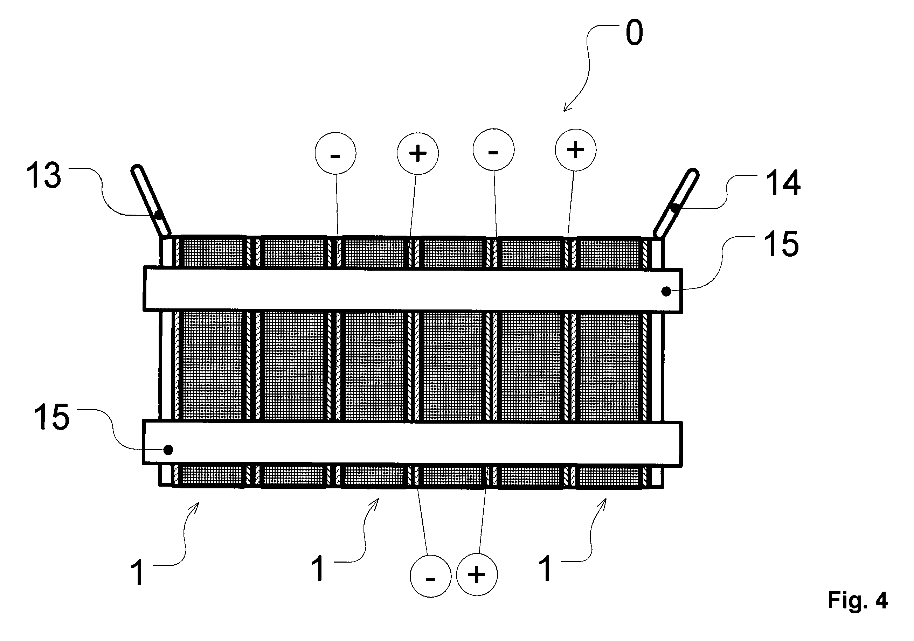

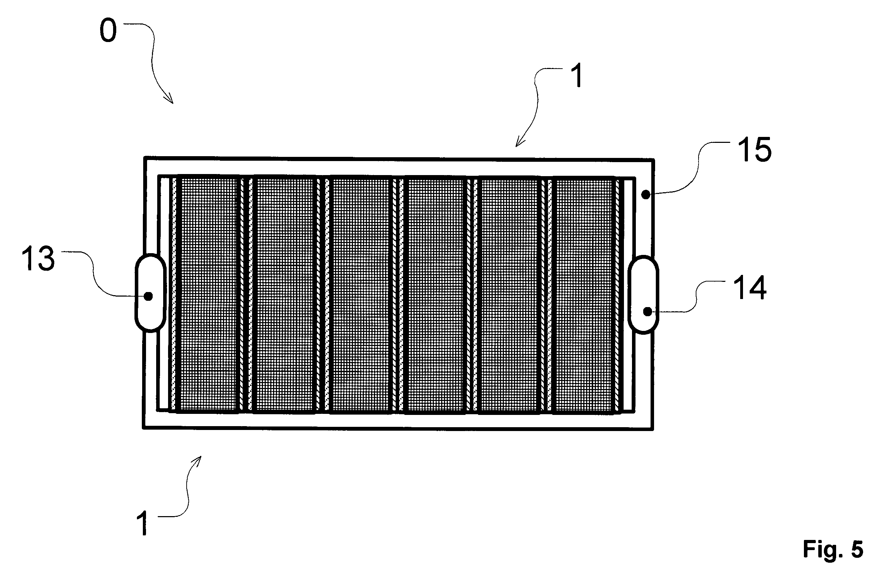

Die Figuren 4 und 5 zeigen, wie aus eine Mehrzahl von Zellgehäusen 1 zu einer Batterie 0 zusammengefasst werden kann. Hierzu werden die Zellgehäuse 1 (im gezeichneten Beispiel sechs an der Zahl) mit den gegennamigen Polen - jeweils (+) auf (-) - aneinander anliegend, zwischen zwei einem negativen Kontakt 13 und einem positven Kontakt 14 gestapelt und mit Hilfe von Spannmitteln 15 verspannt. Auf diese Weise entsteht eine Serienschaltung der einzelnen Zellgehäuse. Wenn die Zellchemie auf 3.6 V Lithium-Ionen-Technologie beruht und jedes Zellgehäuse 1 entsprechend Figur 1 zwei galvanische Zellen enthält, beträgt die Batteriespannung zwischen Kontakten 13, 14 insgesamt 43.2 V. Um die Kapazität zu steigern, können zwei derartige Batterien 0 bei gleich bleibender Spannung parallel geschaltet werden.

Die auf die Batterie 0 wirkenden äußeren und inneren Kräfte werden von den Spannmitteln 15 und den Rahmen 2 der einzelnen Zellgehäusen 1 aufgenommen. Die mechanisch empfindlichen Elektroden und der Separator werden so von schädlicher Krafteinwirkung frei gehalten.

Die Batterie und die Zellgehäuse wurden lediglich schematisch dargestellt. Des Weiteren kann die Batterie mit an sich bekannten Funktionseinheiten wie Kühlaggregat und/oder Batteriemanagementsystem versehen werden.

### Bezugszeichenliste

- 0: Batterie
- 1: Zellgehäuse
- 2: Rahmen
- 3: Kupferkörper
- 4: Aluminiumkörper
- 5: Anoden-Aktivmaterial auf Cu-Körper
- 6: Kathoden-Aktivmaterial auf Al-Körper
- 7: Bimetall
- 71: Cu-Folie des Bimetalls
- 72: AI-Folie des Bimetalls
- 7*: zweites Bimetall
- 8: Kathoden-Aktivmaterial auf Bimetall
- 9: Anoden-Aktivmaterial auf Bimetall
- 10: Elektrolyt
- 11: Separator
- 12: Dichtung
- 13: negativer Kontakt
- 14: positiver Kontakt
- 15: Spannmittel
- (-): negativer Pol
- (+): postiver Pol

## Patentansprüche

1. Batterie (0), mit einer Mehrzahl von in sich geschlossenen, im Wesentlichen quaderförmigen Zellgehäusen (1), bei denen jeweils eine Seitenfläche zumindest teilweise als negativer Pol (-) und die gegenüberliegende Seitenfläche zumindest teilweise als positiver Pol (+) ausgebildet ist, wobei die Zellgehäuse (1) Pol (-) an Pol (+) aneinander anliegend, sich zwischen einem positiven Kontakt (14) und einem negativen Kontakt (13) erstrecken, und wobei die Zellgehäuse (1) jeweils von einem elektrisch nicht leitenden, mechanisch tragenden Rahmen (2) umgrenzt sind,
**gekennzeichnet durch**
mindestens ein aus Kupfer und Aluminium gebildetes, ebenes, kupferseitig mit Anoden-Aktivmaterial (9), aluminiumseitig mit Kathoden-Aktivmaterial (8) beschichtetes Bimetall (7), welches sich innerhalb eines der Zellgehäuse (1) parallel zu dessen Polen (+), (-) erstreckt, wobei das Bimetall (7) an dem Rahmen (2) angebracht und im Kontaktbereich mit einer Dichtung (12) ionisch dichtend abgedichtet ist ))und dergestalt das Zellgehäuse (1) in zumindest zwei seriell geschaltete galvanische Zellen geteilt ist.

2. Batterie nach Anspruch 1,
**dadurch gekennzeichnet,**
**dass** der negative Pol (-) des Zellgehäuses (1) von einem flächigen, innenseitig mit Anoden-Aktivmaterial (5) beschichteten Kupferkörper (3) gebildet ist.

3. Batterie nach Anspruch 1 oder 2,
**dadurch gekennzeichnet,**
**dass** der positive Pol (+) des Zellgehäuses (1) von einem flächigen, innenseitig mit Kathoden-Aktivmaterial (6) beschichteten Aluminiumkörper (4) gebildet ist.

4. Batterie nach Anspruch 2 oder 3,
**dadurch gekennzeichnet,**
**dass** innerhalb des Zellgehäuses (1) auf dem Bimetall (7) aufgeschichtetes Aktivmaterial (8), (9) mit auf einem Pol (+), (-) aufgeschichtetem Konter-Aktivmaterial (5), (6) eine galvanische Zelle bildet.

5. Batterie nach einem der Ansprüche 1 bis 4,
**dadurch gekennzeichnet,**
**dass** zumindest ein zweites aus Kupfer und Aluminium gebildetes, ebenes, kupferseitig mit Anoden-Aktivmaterial (5), aluminiumseitig mit Kathoden-Aktivmaterial (6) beschichtetes Bimetall (7*), welches sich innerhalb des Zellgehäuses (1) parallel zum ersten Bimetall (7) erstreckt, ionisch dichtend am Rahmen (2) des Zellgehäuses (1) angebunden ist und dergestalt das Zellgehäuse (1) in zumindest drei seriell geschaltete galvanische Zellen geteilt ist, wobei auf dem ersten Bimetall (7) aufgeschichtetes Aktivmaterial mit auf dem zweiten Bimetall (7*) aufgeschichtetem Konter-Aktivmaterial eine galvanische Zelle bildet.

6. Batterie nach einem der Ansprüche 1 bis 5,
**dadurch gekennzeichnet,**
**dass** die Zellgehäuse (1) mittels mindestens eines die Rahmen (2) umgreifenden Spannmittels (15) zu einem Stapel verspannt sind.

7. Batterie nach einem der Ansprüche 1 bis 6,
**dadurch gekennzeichnet,**
**dass** das Anoden-Aktivmaterial (5), (9) ausgewählt ist aus der Gruppe umfassend Graphit; amorphe Kohlenstoffe; Lithium-Speichermetalle und -legierungen, einschließlich nanokristallines oder amorphes Silizium sowie Silizium-Kohlenstoff-Komposite, Zinn, Aluminium, und Antimon; und Li₄Ti₅O₁₂ oder deren Mischungen.

8. Batterie nach einem der Ansprüche 1 bis 7,
**dadurch gekennzeichnet,**
**dass** das Kathoden-Aktivmaterial (6), (8) ausgewählt ist aus der Gruppe umfassend Lithiummetalloxide vom Typ LiMₓO₂, einschließlich LiCoO₂; LiNiO₂; LiNi₁₋ₓCoₓO₂; LiNi_{0,85}Co_{0,1}Al_{0,05}O_{2;} Li₁₊ₓ(Ni_{y}Co_{1-2y}Mn_{y})₁₋ₓO₂, 0 ≤ x ≤ 0,17, 0 ≤ y ≤ 0,5; dotierte oder undotierte LiMn₂O₄ Spinelle; und dotierte oder undotierte Lithiummetallphosphate LiMPO₄, einschließlich LiFePO₄, LiMnPO₄, LiCoPO₄, LiVPO₄; sowie Konversionsmaterialien wie Eisen(III)fluorid (FeF₃) oder deren Mischungen.

9. Batterie nach einem der Ansprüche 1 bis 8,
**dadurch gekennzeichnet,**
**dass** es sich bei dem Bimetall (7) um eine mit einer Aluminiumfolie (72) kaltverschweißten Kupferfolie (71) handelt.

10. Batterie (0), mit einer Mehrzahl von in sich geschlossenen, im Wesentlichen quaderförmigen Zellgehäusen (1), bei denen jeweils eine Seitenfläche zumindest teilweise als negativer Pol (-) und die gegenüberliegende Seitenfläche zumindest teilweise als positiver Pol (+) ausgebildet ist, wobei die Zellgehäuse (1) Pol (-) an Pol (+) aneinander anliegend, sich zwischen einem positiven Kontakt (14) und einem negativen Kontakt (13) erstrecken, und wobei die Zellgehäuse (1) jeweils von einem elektrisch nicht leitenden, mechanisch tragenden Rahmen (2) umgrenzt sind,
**gekennzeichnet durch**
mindestens ein aus Aluminium gebildetes, ebenes, einerseits mit einem Lithium-Titanat (Li₄Ti₅O₁₂)-haltigen Anoden-Aktivmaterial (9), andererseits mit Kathoden-Aktivmaterial (8) beschichtetes Monometall, welches sich innerhalb eines der Zellgehäuse (1) parallel zu dessen Polen (+), (-) erstreckt, ))wobei das Monometall an dem Rahmen (2) angebracht und im Kontaktbereich mit einer Dichtung (12) ionisch abgedichtet ist und dergestalt das Zellgehäuse (1) in zumindest zwei seriell geschaltete galvanische Zellen geteilt ist.

## Claims

1. Battery (0), with a plurality of self-contained, essentially parallelepiped-shaped cell casings (1), in each of which a side surface is realized, at least partially, as a negative terminal (-), and wherein the opposite side face is realized, at least partially, as a positive terminal (+), wherein the cell housings (1) are arranged between a positive contact (14) and a negative contact (13), and terminal (-) is adjacent to terminal (+), and wherein the boundary of the cell housing (1) ,in each case, is defined by an electrically non-conductive, mechanically load-bearing frame (2), which is
**characterized by**
at least one bimetal (7), which is flat and which is formed of copper and aluminum, and which is coated with anode active material (9) on the copper side and with cathode active material (8) on the aluminum side, and which extends within the cell housing (1) parallel to the terminals (+) and (-), wherein the bimetal (7) is attached to the frame (2) and is sealed in respect to ions, in the contact region, with a seal (12), such that the cell housing (1) is divided into at least two galvanic cells that are connected in series.

2. The battery of claim 1,
**characterized in that**
the negative terminal (-) of the cell housing (1) is formed by a copper body (3), the inside of which is coated, on the surface, with anode active material (5).

3. The battery of claim 1 or 2,
**characterized in that**
the positive terminal (+) of the cell housing (1) is formed by an aluminum body (4), the inside of which is coated, on the surface, with cathode active material (6)

4. The battery of claim 2 or 3,
**characterized in that**,
the active material (8), (9) as coated onto the bimetal (7), within the cell casing (1), forms a galvanic cell, together with the counterpart active material (5), (6) as coated onto a terminal (+), (-).

5. The battery according to any one of claims 1 to 4,
**characterized in that**
at least one second bimetal (7*), which is flat and which is made of copper and aluminum, and which is coated with anode active material (5) on the copper side and with cathode active material (6) on the aluminum side, and which extends within the cell housing (1), parallel to said first bimetal (7), and which is sealed vis-à-vis ions and attached onto the frame (2) of the cell housing (1), and wherein the cell casing (1) is divided into at least three galvanic cells that are connected in series, wherein the active material as coated upon the first bimetal (7) forms a galvanic cell together with the counterpart active material as coated onto the second bimetal (7*).

6. The battery according to any one of claims 1 to 5, **characterized in that** the cell housings (1) are clamped together in a stack by means of at least one clamping device (15) surrounding the frames (2).

7. The battery according to any one of claims 1 to 6, **characterized in that** the anode active material (5), (9) is selected from the group consisting of graphite; amorphous carbon; lithium-storage metals and alloys, including nano-crystalline or amorphous silicon, as well as silicon-carbon-composites, tin, aluminum, and antimony; and Li₄Ti₅O₁₂ or mixtures thereof.

8. The battery according to any one of claims 1 to 7, **characterized in that** the cathode active material (6), (8) is selected from the group consisting of lithium metal oxides of the type LiMₓO₂, including LiCoO₂; LiNiO₂; LiNi₁₋ₓCoₓO₂; LiNi_{0,85}Co_{0,1}Al_{0,05}O₂; Li₁₊ₓ(Ni_{y}Co₁₋₂yMn_{y})₁₋ₓO₂, 0 ≤ x ≤ 0,17, 0 ≤ y ≤ ₅ 0,5; doped or undoped LiMn₂O₄ spinels; and doped and undoped lithium metal phosphates LiMPO₄, including LiFePO₄, LiMnPO₄, LiCoPO₄, LiVPO₄; and conversion materials such as iron(III)fluoride (FeF₃), or mixtures thereof.

9. The battery according to any one of claims 1 to 8, **characterized in that** the bimetal (7) is a copper foil (71) that is cold-welded to an aluminum foil (72).

10. Battery (0), with a plurality of self-contained, essentially parallelepiped-shaped cell casings (1), in each of which a side surface is realized, at least partially, as a negative terminal (-) and wherein the opposite side face is realized, at least partially, as a positive terminal (+), wherein the cell housings (1) are arranged between a positive contact (14) and a negative contact (13), and terminal (-) is adjacent to terminal (+), and wherein the boundary of the cell housing (1) ,in each case, is defined by an electrically non-conductive, mechanically load-bearing frame (2), which is
**characterized by**
at least one mono metal, which is flat and which is formed at least of aluminum, and which is coated, on one side, with an anode active material (9), containing a lithium titanate (Li₄Ti₅O₁₂, and which is coated with a cathode active material (8) on the other side, and which extends within the cell housing (1), parallel to the terminals (+) and (-), wherein the mono metal is attached to the frame (2), and is sealed in respect to ions, in the contact region, with a seal (12), such that the cell housing (1) is divided into at least two galvanic cells that are connected in series.

## Revendications

1. Batterie (0), avec une pluralité de boîtiers de cellules (1) de forme essentiellement parallélépipédique, autonomes, dans chacun desquels une surface latérale est réalisée, au moins partiellement, en tant que borne négative (-), et dans lesquels la face latérale opposée est réalisée, au moins partiellement, en tant que borne positive (+), dans laquelle les boîtiers de cellules (1) sont agencés entre un contact positif (14) et un contact négatif (13), et une borne (-) est adjacente à une borne (+), et dans laquelle la frontière du boîtier de cellules (1), dans chaque cas, est définie par un cadre (2) portant mécaniquement la charge, électriquement non conducteur, qui est
**caractérisée par**
au moins un bilame (7), qui est plat et qui est constitué de cuivre et d'aluminium, et qui est revêtu d'un matériau actif d'anode (9) du côté cuivre et d'un matériau actif de cathode (8) du côté aluminium, et qui s'étend dans le boîtier de cellules (1) parallèlement aux bornes (+) et (-), dans laquelle le bilame (7) est attaché au cadre (2) et est scellé par rapport aux ions, dans la région de contact, par un joint (12), de sorte que le boîtier de cellules (1) soit divisé en au moins deux cellules galvaniques qui sont connectées en série.

2. Batterie selon la revendication 1,
**caractérisée en ce que**
la borne négative (-) du boîtier de cellules (1) est formée par un corps en cuivre (3), dont l'intérieur est revêtu, sur la surface, du matériau actif d'anode (5).

3. Batterie selon la revendication 1 ou 2,
**caractérisée en ce que**
la borne positive (+) du boîtier de cellules (1) est formée par un corps en aluminium (4), dont l'intérieur est revêtu, sur la surface, du matériau actif de cathode (6).

4. Batterie selon la revendication 2 ou 3,
**caractérisée en ce que**,
le matériau actif (8), (9) tel que déposé sur le bilame (7), dans le boîtier de cellules (1), forme une cellule galvanique avec le matériau actif (5), (6) équivalent tel que déposé sur une borne (+), (-).

5. Batterie selon l'une quelconque des revendications 1 à 4,
**caractérisée par**
au moins un deuxième bilame (7*), qui est plat et qui est réalisé en cuivre et en aluminium, et qui est revêtu du matériau actif d'anode (5) du côté cuivre et du matériau actif de cathode (6) du côté aluminium, et qui s'étend dans le boîtier de cellules (1), parallèle au dit premier bilame (7), et qui est scellé vis-à-vis des ions et attaché sur le cadre (2) du boîtier de cellules (1), et dans laquelle le boîtier de cellules (1) est divisé en au moins trois cellules galvaniques qui sont connectées en série, dans laquelle le matériau actif tel que déposé sur le premier bilame (7) forme une cellule galvanique avec le matériau actif équivalent tel que déposé sur le deuxième bilame (7*).

6. Batterie selon l'une quelconque des revendications 1 à 5, **caractérisée en ce que** les boîtiers de cellules (1) sont serrés les uns avec les autres en une pile au moyen d'au moins un dispositif de serrage (15) entourant les cadres (2).

7. Batterie selon l'une quelconque des revendications 1 à 6, **caractérisée en ce que** le matériau actif d'anode (5), (9) est sélectionné dans le groupe consistant en le graphite ; le carbone amorphe ; des métaux et des alliages de stockage à base de lithium, comprenant le silicium nanocristallin ou amorphe, ainsi que des composites silicium-carbone, l'étain, l'aluminium, et l'antimoine ; et le Li₄Ti₅O₁₂ ou des mélanges de ceux-ci.

8. Batterie selon l'une quelconque des revendications 1 à 7, **caractérisée en ce que** le matériau actif de cathode (6), (8) est sélectionné dans le groupe consistant en des oxydes métalliques de lithium du type LiMₓO₂, comprenant le LiCoO₂ ; le LiNiO₂; le LiNi₁₋ₓCoₓO₂ ; le LiNi₀,₈₅Co₀,1Al_{0,05}O₂ ; le Li₁₊ₓ(Ni_{y}Co_{1-2y}Mn_{y})₁₋ₓO₂, 0 ≤ x ≤ 0,17,0 ≤ y ≤ 0,5 ; des spinelles de LiMn₂O₄ dopés ou non dopés ; et des phosphates métalliques de lithium dopés et non dopés LiMPO₄, comprenant le LiFePO₄, le LiMnPO₄, le LiCoPO₄, le LiVPO₄ ; et des matériaux de conversion tels que le fluorure (III) de fer (FeF₃), ou des mélanges de ceux-ci.

9. Batterie selon l'une quelconque des revendications 1 à 8, **caractérisée en ce que** le bilame (7) est une feuille de cuivre (71) qui est soudée à froid à une feuille d'aluminium (72).

10. Batterie (0), avec une pluralité de boîtiers de cellules (1) de forme essentiellement parallélépipédique, autonomes, dans chacun desquels une surface latérale est réalisée, au moins partiellement, en tant que borne négative (-) et dans lesquels la face latérale opposée est réalisée, au moins partiellement, en tant que borne positive (+), dans laquelle les boîtiers de cellules (1) sont agencés entre un contact positif (14) et un contact négatif (13), et une borne (-) est adjacente à une borne (+), et dans laquelle la frontière du boîtier de cellules (1), dans chaque cas, est définie par un cadre (2) portant mécaniquement la charge, électriquement non conducteur, qui est
**caractérisée par**
au moins un mono métal, qui est plat et qui est formé au moins à partir d'aluminium, et qui est revêtu, d'un côté, d'un matériau actif d'anode (9), contenant du titanate de lithium (Li₄Ti₅O₁₂), et qui est revêtu d'un matériau actif de cathode (8) de l'autre côté, et qui s'étend dans le boîtier de cellules (1), parallèle aux bornes (+) et (-), dans laquelle le mono métal est attaché au cadre (2), et est scellé par rapport aux ions, dans la région de contact, par un joint (12), de sorte que le boîtier de cellules (1) soit divisé en au moins deux cellules galvaniques qui sont connectées en série.
